# DEMANDE DE BREVET EUROPEEN

(11) **EP 1 466 577 A1**
(43) Date de publication de la demande: **13.10.2004**
(21) Numéro de dépôt: 04290961.4
(22) Date de dépôt: 09.04.2004
(51) Int. Cl.: A61J 9/06

(54) **Support de biberon**

(30) Priorité: 11.04.2003 FR 0304561
(71) Demandeur: Come, Thierry, 95620 Parmain (FR); LAUMONIER, Alain, F-95690 Nesles-la-Vallée (FR); LAUMONIER, Bruno, F-95690 Nesles-la-Vallée (FR); LAUMONIER, Yves, F-95690 Nesles-la-Vallée (FR)
(72) Inventeur: Come, Thierry, 95620 Parmain (FR); LAUMONIER, Alain, F-95690 Nesles-la-Vallée (FR); LAUMONIER, Bruno, F-95690 Nesles-la-Vallée (FR); LAUMONIER, Yves, F-95690 Nesles-la-Vallée (FR)
(74) Mandataire: Bouju, André

(57) **Abrégé**

L'invention concerne un support de biberon.

Il comprend une tige flexible (1) à une extrémité de laquelle sont montés des moyens (3) de fixation à une structure de support et à l'autre extrémité de laquelle sont montés de moyens de réception (8, 10, 11 ) d'un biberon.

## Description

La présente invention a pour objet un support de biberon.

On connaît par le document FR-A-2 631 793 un dispositif pour attacher un biberon à un poignet d'enfant. Un tel dispositif permet d'éviter que l'enfant jette ou laisse tomber son biberon. Il constitue toutefois une gêne pour l'enfant et ne saurait donc rester fixé au poignet durant une longue période.

On connaît également par le document WO 83/01737 un dispositif permettant de fixer le corps d'un biberon à un support. La tétine du biberon est reliée au corps par un tuyau souple. Ce dispositif présente toutefois l'inconvénient que rien n'empêche la tétine de tomber si l'enfant vient à l'ôter de sa bouche.

La présente invention vise à palier ces inconvénients.

Plus particulièrement, l'invention a pour but de fournir un dispositif permettant d'assujettir un biberon à un support, permettant à l'enfant de s'alimenter sans l'intervention de ses parents et d'avoir les mains libres.

A cet effet, l'invention a pour objet un support de biberon comprenant une tige flexible à une extrémité de laquelle sont montés des moyens de fixation à une structure de support et à l'autre extrémité de laquelle sont montés des moyens de réception d'un biberon.

Ainsi, le biberon est fixé à la structure de support de sorte qu'il ne peut être jeté ou laissé tomber. Du fait de la flexibilité de la tige du support, l'enfant peut néanmoins l'approcher de sa bouche et s'alimenter.

La tige flexible peut être susceptible de déformation de type soit plastique soit élastique. On entend par là, dans le premier cas, que la tige conserve la forme qui lui a été donnée en dernier lieu et, dans le deuxième cas, que la tige reprend sa forme d'origine lorsqu'elle n'est pas sollicitée.

Dans un mode de réalisation particulier de l'invention, lesdits moyens de fixation comprennent une pince, par exemple à ressort ou à vis.

Dans une autre réalisation particulière, les moyens de fixation comprennent une pince destinée à être fixée au support et des moyens d'association amovible à la tige flexible.

Selon un mode de réalisation, les moyens de réception comprennent une pince comportant deux bras associés en rotation, une molette de serrage étant agencée pour mettre en rotation lesdits bras de sorte à refermer la pince par vissage de la molette.

Selon cette réalisation, un moyen de contrainte est associé aux bras autour de leur axe de rotation de sorte à ouvrir la pince lorsque la molette n'agit pas sur lesdits bras.

Egalement dans un mode de réalisation particulier, lesdits moyens de réception comprennent une tête de réception comportant une cavité apte à recevoir le fond d'un biberon, et des moyens de blocage dudit fond dans ladite cavité.

Plus particulièrement, lesdits moyens de blocage peuvent comprendre une gaine généralement cylindrique dont une extrémité est agencée pour se visser sur la paroi de ladite cavité et dont l'autre extrémité est munie d'une collerette annulaire en saillie vers l'intérieur, apte à prendre appui sur le bord extérieur d'un support de tétine du biberon.

On peut en outre prévoir des moyens élastiques au fond de ladite cavité, aptes à coopérer avec le fond dudit biberon pour presser ledit bord extérieur du support de tétine contre ladite collerette.

On décrira maintenant à titre d'exemples non limitatifs deux modes de réalisation de l'invention en référence aux dessins schématiques annexés dans lesquels :
- la figure 1 est une vue partiellement en coupe axiale d'un support de biberon selon un premier mode de réalisation de l'invention,
- la figure 2 est une vue en perspective d'une poussette munie d'un support de biberon selon un deuxième mode de réalisation,
- la figure 3 est une représentation de côté d'un support de biberon selon un troisième mode de réalisation, ledit support portant un biberon,
- la figure 4 est une représentation de face du support de biberon de la figure 3,
- la figure 5 est une représentation en perspective d'un mode de réalisation des moyens de fixation, la pince étant ouverte.

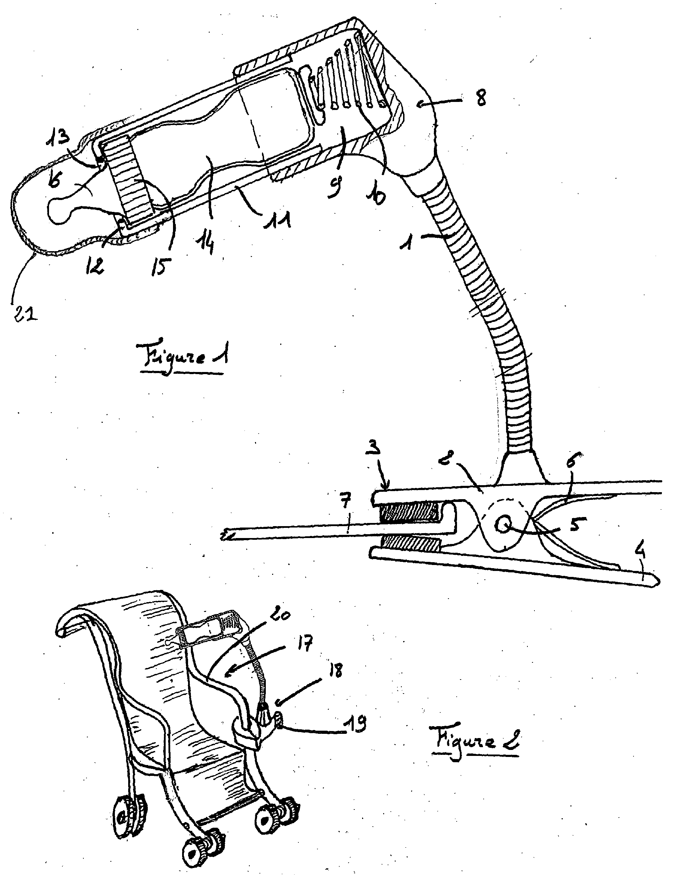

On voit à la figure 1 un support de biberon comportant une tige flexible 1 réalisée de toute manière connue, par exemple en feuillard métallique agrafé ou en matière plastique.

A une de ses extrémités, la tige flexible 1 est fixée à un des leviers 2 d'une pince 3. Un deuxième levier 4 de la pince 3 est articulé sur le levier 2 autour d'un axe 5. Un ressort 6 maintient écartées deux extrémités en vis à vis des leviers 2 et 4 de manière à rapprocher les autres extrémités de ces leviers et ainsi à pincer une structure de support 7 constituée par exemple, dans le cas présent, d'une tablette de chaise haute pour enfant.

L'autre extrémité de la tige flexible 1 est fixée à une tête de réception 8. La tête 8 forme une cavité 9 au fond de laquelle est disposé un ressort hélicoïdal conique 10.

La paroi intérieure de la cavité 9 est cylindrique est munie à proximité de son bord d'un filetage intérieur susceptible de coopérer avec un filetage extérieur formé à une extrémité d'une gaine 11 également cylindrique.

A l'opposé de son extrémité filetée, la gaine 11 est munie d'une collerette annulaire 12 en saillie vers l'intérieur et délimitant un orifice circulaire 13.

Lorsque la gaine 11 est détachée de la tête de réception 8, un biberon 14 peut être disposé dans cette gaine avec le bord extérieur du support 15 de tétine en appui contre la collerette 12 et la tétine 16 dépassant par l'orifice 13.

Lorsque la gaine 11 est vissée dans la cavité 9, le fond du biberon vient en appui contre le ressort 10 et le comprime, ce qui a pour effet de plaquer le support 15 de la tétine contre la collerette 12 et ainsi de rendre le support de biberon adaptable à différentes longueurs de biberons.

Un couvercle 21 maintenu sur la gaine 11 par un léger serrage mécanique ou élastique protégera la tétine en dehors de l'utilisation normale ou en cours de transport.

Pour des mayens pratiques, l'utilisateur aura à sa disposition plusieurs longueurs de gaine qu'il adaptera au mieux à la longueur des biberons utilisés.

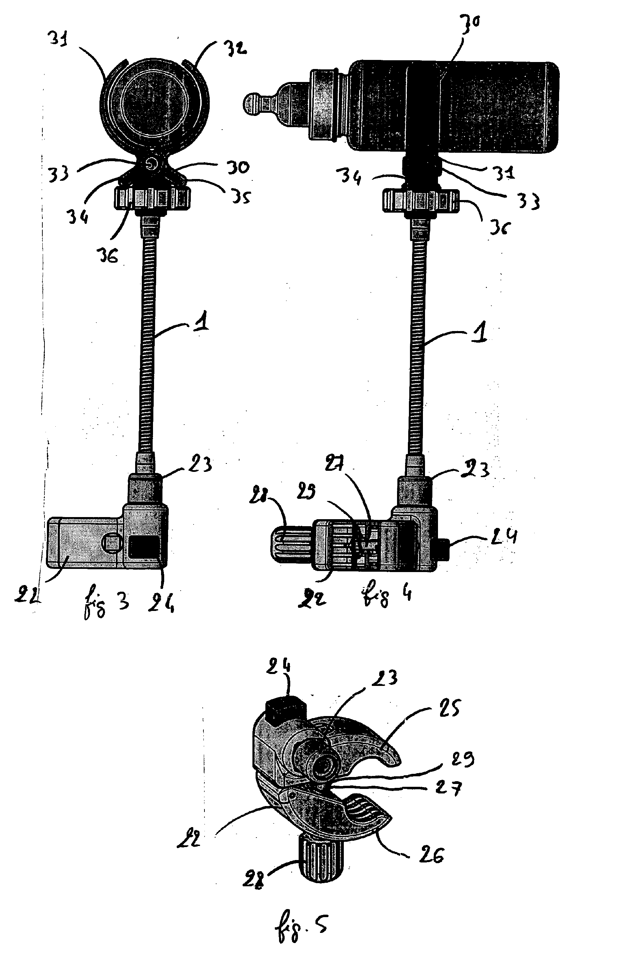

On voit à la figure 2 un autre mode de réalisation mieux adapté à la fixation du support de biberon à une structure de support tubulaire, par exemple à un montant d'une poussette 17.

La tige 1 ainsi que les organes de réception du biberon sont identiques à ceux qui étaient représentés à la figure 1 mais la pince 18 est ici une pince à vis 19 permettant de fixer le support de biberon sur un tube 20 de la poussette.

Selon une autre réalisation, la tige 1 est associée de façon amovible à une pince 22 telle que représentée sur la figure 5. La pince 22 comprend un logement 23 de réception d'une extrémité de la tige 1. A cet effet, on peut prévoir que l'extrémité de la tige 1 soit pourvue d'un ergot (non représenté) comportant une encoche. Le logement 23 comprend alors une broche (non représentée) destinée à s'engager dans l'encoche lorsque l'extrémité de la tige 1 est enfoncée dans le logement. La broche est associée à des moyens de contrainte permettant de contraindre la broche dans l'encoche. Ces moyens de contrainte sont par exemple associés à un bouton de commande 24. Le bouton de commande 24 est agencé pour écarter la broche de l'encoche lorsqu'il est actionné de sorte à libérer la tige 1.

Ainsi, on peut prévoir plusieurs pinces 22 laissées chacune sur un support particulier, tel qu'un lit et une poussette. On associe alors la tige 1 à l'une des pinces 22 selon l'utilisation souhaitée du porte biberon, sans avoir à desserrer la pince 22 de son support pour la resserrer sur un autre, ce qui facilite l'utilisation du porte biberon.

Toujours selon cette réalisation représentée sur la figure 5, la pince 22 comprend deux leviers 25, 26 associés en rotation. Un axe 27 est prévu pour traverser les deux leviers 25, 26. L'axe est pourvu d'une molette 28 de serrage de la pince et d'un ressort 29 agencé autour de l'axe et dont chacune des extrémités prend appui sur une surface correspondante des leviers 25 et 26. Le serrage de la molette 28 permet de rapprocher les deux leviers 25, 26 l'un de l'autre de sorte à fermer la pince 22 autour d'un support, tel qu'un montant de lit pour enfant par exemple. Lorsque l'on desserre la molette, le ressort 29 écarte les leviers 25 et 26 de sorte à ouvrir la pince 22 et à la libérer de son support.

Selon une autre réalisation représentée sur les figures 3 et 4, les moyens de réception du biberon comprennent une pince 30 comportant deux bras 31 et 32 associés en rotation autour d'un axe de rotation 33. Chaque bras 31, 32 comprend un décrochement 34, respectivement 35 s'étendant au delà de l'axe de rotation 33. Les décrochement 34 et 35 prennent appui sur une molette de serrage 36 de sorte que le vissage de la mollette 36 autour d'un pas de vis prévu à une extrémité de la tige 1 entraîne le rapprochement des bras 31 et 32 de la pince 30 par appui sur les décrochements 34 et 35. Ainsi, on sert la pince 30 autour du corps d'un biberon comme représenté sur les figures 3 et 4.

Un moyen de contrainte (non représenté) est associé aux bras 31 et 32 autour de leur axe de rotation 33. Ces moyens de contraintes sont agencés pour écarter les bras 31 et 32 lorsque la molette 36 n'appuie pas sur les décrochements 34 et 35. Ainsi, lorsque la molette est dévissée, les bras 31 et 32 s'écartent du corps du biberon de sorte à permettre de retirer celui-ci du support porte biberon.

La longueur du pas de vis à l'extrémité de la tige 1 est agencé de sorte que la pince 30 présente un grand débattement d'ouverture afin de pouvoir adapté la pince à différentes tailles de biberon.

## Revendications

1. Support de biberon **caractérisé par le fait qu'**il comprend une tige flexible (1) à une extrémité de laquelle sont montés des moyens (3) de fixation à une structure de support et à l'autre extrémité de laquelle sont montés de moyens de réception (8, 10, 11) d'un biberon.

2. Support de biberon selon la revendication 1, dans lequel ladite tige est susceptible de déformations de type plastique.

3. Support de biberon selon la revendication 1, dans lequel ladite tige est susceptible de déformations de type élastique.

4. Support de biberon selon l'une quelconque des revendications 1 à 3, dans lequel lesdits moyens de fixation comprennent une pince.

5. Support de biberon selon la revendication 4, dans lequel ladite pince est une pince à ressort (6).

6. Support de biberon selon la revendication 4, dans lequel ladite pince est une pince à vis (19).

7. Support de biberon selon l'une quelconque des revendications 1 à 3, dans lequel les moyens de fixation comprennent une pince destinée à être fixée au support et des moyens d'association amovible à la tige flexible.

8. Support de biberon selon l'une quelconque des revendications 1 à 6, dans lequel les moyens de réception comprennent une pince comportant deux bras associés en rotation, une molette de serrage étant agencée pour mettre en rotation lesdits bras de sorte à refermer la pince par vissage de la molette.

9. Support de biberon selon la revendication 8, dans lequel un moyen de contrainte est associé aux bras autour de leur axe de rotation de sorte à ouvrir la pince lorsque la molette n'agit pas sur lesdits bras.

10. Support de biberon selon l'une quelconque des revendications 1 à 7, dans lequel lesdits moyens de réception comprennent une tête de réception (8) comportant une cavité (9) apte à recevoir le fond d'un biberon, et des moyens de blocage (11) dudit fond dans ladite cavité.

11. Support de biberon selon la revendications 10, dans lequel lesdits moyens de blocage comprennent une gaine généralement cylindrique dont une extrémité est agencée pour se visser sur la paroi de ladite cavité et dont l'autre extrémité est munie d'une collerette annulaire (12) en saillie vers l'intérieur, apte à prendre appui sur le bord extérieur d'un support de tétine du biberon.

12. Support de biberon selon la revendications 11, comprenant des moyens élastiques (10) au fond de ladite cavité, aptes à coopérer avec le fond dudit biberon pour presser ledit bord extérieur du support de tétine contre ladite collerette.
